# EUROPEAN PATENT SPECIFICATION

(11) **EP 2 610 510 B1**
(45) Date of publication and mention of the grant of the patent: **04.03.2015**
(21) Application number: 12198747.3
(22) Date of filing: 20.12.2012
(51) Int. Cl.: F16C 33/44, F16C 33/38

(54) **Variable guide cage for rolling bearings and high speed bearing equipped with such a cage**
Käfig mit variabler Führung für Wälzlager und Hochgeschwindigkeitslager mit einem derartigen Käfig
Cage de guidage variable pour paliers à roulement et palier à grande vitesse équipé d'une telle cage

(30) Priority: 29.12.2011 IT TO20111235
(43) Date of publication of application: 03.07.2013
(73) Proprietor: Aktiebolaget SKF, 415 50 Göteborg (SE)
(72) Inventor: Bottazzi, Giorgio, 10040 Val Della Torre (TO) (IT)
(74) Representative: Tedeschini, Luca

(56) References cited:
- JP-A- 2006 097 731
- US-A1- 2003 021 506

## Description

### BACKGROUND OF THE INVENTION

The present invention relates to a variable guide cage for rolling bearings, a high speed bearing equipped with such a cage and use thereof.

A rolling bearing comprising an outer ring, an inner ring and a plurality of rolling bodies (balls) interposed between the rings to make them relatively rotational with low friction is known from JP2011074999. The rolling bodies are withheld in the correct position by a cage including an annular body provided with a plurality of radial through seats or pockets adapted to house the balls. The cage is made entirely of a synthetic polyamide-based plastic material, in which poly-functional monomers, which reticulate during molding, are inserted, thus improving the strength of the cage. This cage is guided, i.e. rotationally rests (except for a set, relatively small clearance) on the rolling bodies; it thus withholds the rolling bodies in the correct position, ensuring smooth, noise-free operation. However, for high speed applications (e.g. higher than 10-20,000 rpm), the friction which is developed in use between balls and cage is excessive and increases energy consumption. In order to solve such a problem, a cage guided on the outer ring of the bearing may be made, if this is the stationary ring. In this case, however, especially at low speeds and during acceleration, the rolling bodies are not perfectly withheld in position and undesired noise and vibrations are created.

Furthermore, for high speed applications, an annular cage made either of pressed metal or plastics with a U-shaped cross section, which guides the rolling bodies on the lateral sides only, leaving them free radially on the outside and radially on the inside, is known from US2011/0229067. However, such a cage can only be used effectively with rolling bodies made by rollers.

JP2006097731 discloses a cage according to the preamble of independent claims 1, 6 and 11 and teaches to make the cage of a rolling bearing having spherical rolling bodies in such a manner that the thermal and centrifugal expansion to which the cage, made of a special polymer (PEEK), is subjected during operation moves the "guide" of the cage, i.e. the resting of the same (minus a small set clearance) from the rolling bodies (at low speed) to the outer ring (at higher speed).

However, the cage of JP2006097731 has a geometry, in particular of the pockets or seats for the rolling bodies, which is extremely costly to make and consequently absolutely unsuitable for mass production. Furthermore, in JP2006097731 the balls must be introduced into the seats of the cage from the inside towards the outside, fact which does not allow to obtain the high assembly accuracy between rolling bodies and inner ring of the bearing needed in high speed bearings.

US4277116 teaches a cage of plastic material for rolling bearings having a geometry of the pockets or seats for the rolling bodies which is simpler and more cost-effective to be made than that of JP2006097731. However, it has the same drawbacks as JP2011074999.

### SUMMARY OF THE INVENTION

It is the object of the present invention to overcome the drawbacks of the prior art, and in particular to provide a cage which allows to correctly withhold the rolling bodies, eliminating any noise at low speed and which at the same time does not generate a high friction at high speeds.

It is an additional object of the present invention to provide a rolling bearing for high-precision, high-speed applications which makes use of such a cage.

According to the invention, a cage is thus provided for withholding rolling bodies in a rolling bearing, as defined in claim 1.

Furthermore, a high-precision rolling bearing for high speed applications is provided, according to claim 6. Finally, the invention relates to the use of a cage made of a thermoplastic material in a rolling bearing according to claim 11.

The cage according to the invention, by exploiting the phenomenon of differential thermal expansion between the special thermoplastic material of which the cage is made and the material of the outer ring of the bearing and of the rolling bodies, as well as centrifugal expansion, which is a function of the rotation speed of the cage, may be made so as to have at ambient temperature, with the bearing stationary or working at low speed, a guide realized on the rolling bodies, which are thus withheld in the correct position; noise and vibrations are thus avoided, while the friction between rolling bodies and cage, at such speeds, is maintained low. By increasing the speed, there is a gradual heating of the cage as well as a centrifuge expansion of the same; the cage expands differently from the rolling bodies; the clearance between cage and rolling bodies increases, while the clearance normally present between cage and outer ring of the bearing is gradually reduced, until the guide of the cage is transferred, over a set threshold, from the rolling bodies to the outer ring, because the clearance between the latter and the cage becomes smaller than the clearance between the cage and the rolling bodies. The friction between bearings and cage is thereby reduced and nearly cancelled out, while the cage remains correctly positioned in all cases.

This is obtained also and above all by virtue of the particular geometry adopted for the pockets or seats or alveoli for the rolling bodies provided in the cage, which allows to snappingly introduce the rolling bodies into the pockets or seats or alveoli of the cage from the outside inwards, and at the same time to correctly withhold the rolling bodies with low friction, at both low speeds and high speeds, while making the introduction zone of the balls in the alveoli or pockets or seats of the cage much more robust than e.g. in US4277116.

### BRIEF DESCRIPTION OF THE DRAWINGS

Further features and advantages of the present invention will be apparent in the description of the following non-limitative embodiment thereof, with reference to the accompanying drawings, in which
- figure 1 shows a perspective three-quarters front view of a rolling bearing cage made according to the invention;
- figure 2 shows on enlarged scale a longitudinal radial section view of the cage in figure 1;
- figure 3 shows on enlarged scale a circumferential cross section view of the cage in figure 1;
- figure 4 shows a rolling bearing according to the invention, in which the cage in figure 1-3 is installed;
- figure 5 shows on enlarged scale a detail of the bearing in figure 4 during high speed operation; and
- figures 6 and 7 are two diagrams which illustrate the operation of the bearing in figure 4 with the respective cage at various speeds.

### DETAILED DESCRIPTION OF PREFERRED EMBODIMENTS

With reference to figures from 1 to 5, numeral 1 indicates as a whole a cage for withholding rolling bodies 2 in a rolling bearing 3.

The bearing 3 is a high speed precision rolling bearing, and comprises an outer ring 4, an inner ring 5, a plurality of rolling bodies 2 interposed between the outer ring 4 and the inner ring 5 to make the same relatively rotational with low friction and the cage 1 for withholding the rolling bodies 2 in the correct position.

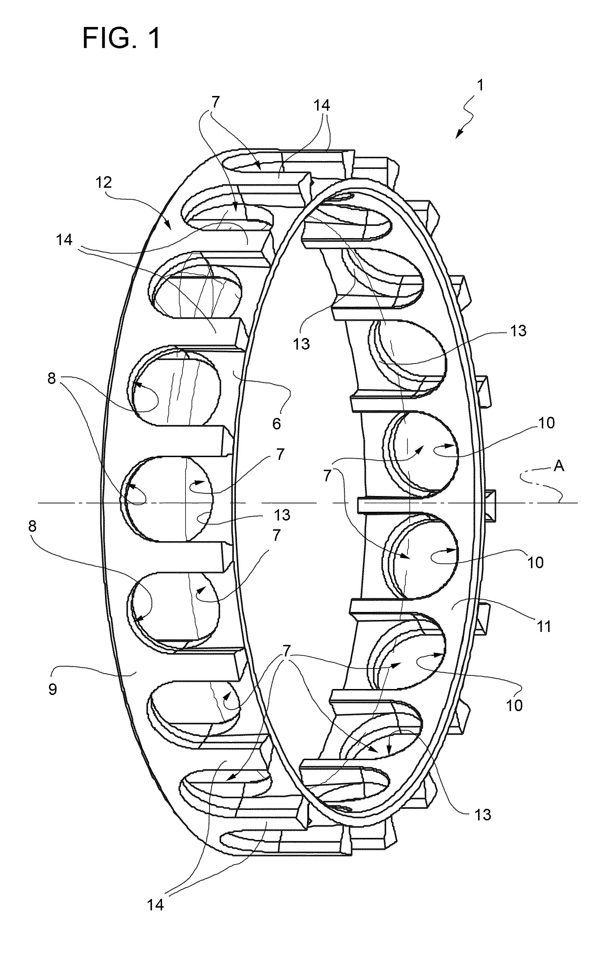

The cage 1 is defined by a single annular body 6, having its symmetry axis A (figure 1), arranged coaxial in use between the outer ring 4 and the inner ring 5, and provided with a plurality of seats or pockets 7 arranged as a crown each delimiting a respective circular profile radially through alveolus 13; the pockets or seats 7 and the respective alveoli 13 are each adapted to house a respective rolling body 2 withholding it both radially towards the outer ring 4, by means of a first edge 8 with a first annular portion 9 of the body 6, arranged radially on the outside of the body 6, and radially towards the inner ring 5 by means of a second edge 10 of a second annular portion 11 of the body 6, arranged radially inside the body 6.

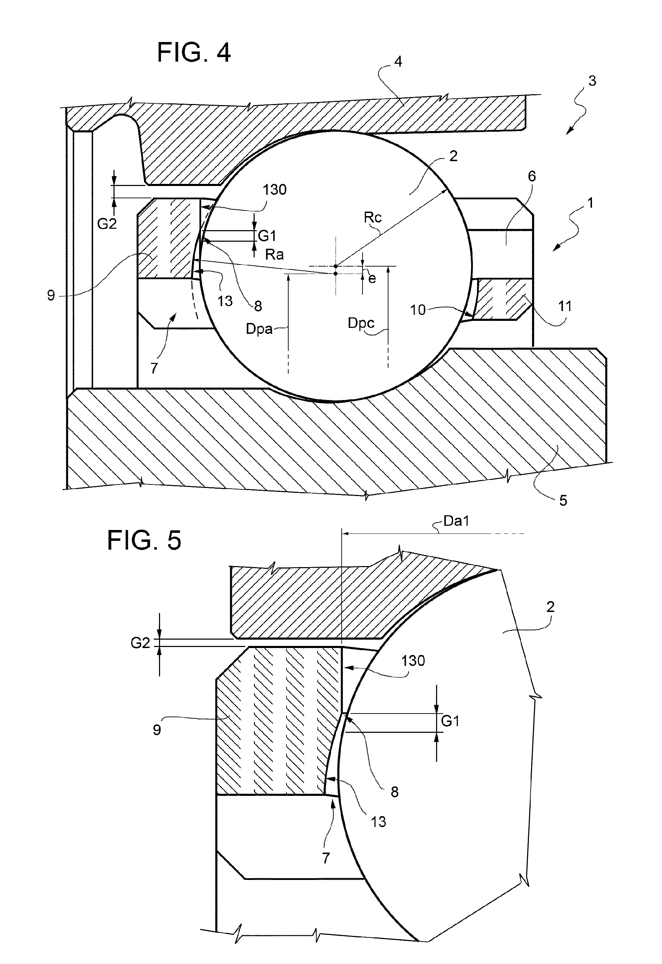

According to a first embodiment of the invention, the body 6 is made of a material having a thermal expansion coefficient greater than that of the materials of which the rolling bodies 2 and an outer ring 4 of the rolling bearing 3, which the cage 1 is intended for, are made. Furthermore, the cage 1 is dimensioned so that, at ambient temperature, the first edge 8 guides the rolling bodies 2 resting thereon, cooperating directly therewith with a first radial clearance G1 (figure 4) set during the step of designing.

"Guiding the rolling bodies resting thereon" indicates where the cage 1 rests during the rotation of the bearing 3 and means, hereinafter, that the edge 8 may slidingly cooperate in use, i.e. when the rings 4 and 5 are relatively rotational at a given relative speed with respect to one another, with the rolling bodies 2 which, in the non-limitative example shown, are balls, thus allowing the rolling bodies 2 to roll free and the cage 1 to move relatively to the radial direction with respect to the rolling bodies 2, within the set clearance limits, while the rolling bodies 2 are restrained to turn between the rings 4 and 5, preferably without any clearance between rings 4,5 and balls 2, because the bearing 3 is a preloaded bearing.

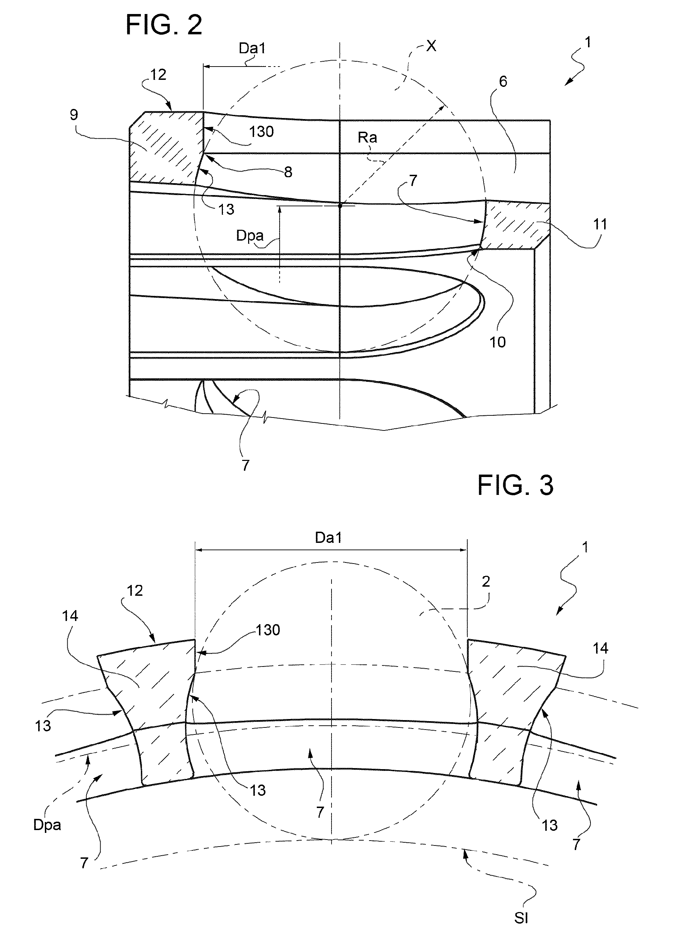

The relative radial movement occurs in all cases only within the limits of clearance G1, which is sufficiently small so that the rolling bodies 2 are maintained, with respect to the cage 1, always in the correct operating position, in which they roll along an ideal cylindrical surface SI, shown with a dashed-and-dotted line in figure 3, which defines the inner envelop diameter of the balls 2.

The cage 1 is further dimensioned so that, in use, at the working temperature of the bearing 3 and above a set speed threshold, the first edge 8 no longer guides the rolling bodies 2, leaving them free to roll substantially without friction with the cage 1, due to a set increase in the value of the first clearance G1, while a radially outer cylindrical lateral surface 12 of the first annular portion 9 of the body 6 cooperates with a second radial clearance G2, under such conditions smaller than clearance G1, with the outer ring 4 of the bearing 3.

Since the outer ring 4 is normally stationary (while the ring 5 turns, restrained to a rotational mechanical member, such as, for example, a shaft), the cage 1, which in use turns relatively with respect to the stationary outer ring 4, but at lower speed than the inner ring 5, slides with sliding friction, with the outer surface 12 thereof on the guide diameter of the outer ring 4, but with friction lower than that produced by the sliding between balls 2 and cage 1. This is the normal situation for high speed bearings. Thus, the cage 1 produces under these conditions a very low friction and cannot undergo any relative radial movement higher than the clearance G2 at the same time. The cage 1 is consequently "guided" under these conditions with clearance G2 on the outer ring 4 and thus maintains a pitch diameter Dpa (figures 2, 3 and 4) of the crown of alveoli 13 correctly positioned in radial direction. The pitch diameter Dpa is the diameter of a circumference, indicated with a dashed-and-dotted line in figure 3, on which all geometric centers of the alveoli 13 are aligned. The alveoli 13 have a circular profile on a circumferential plane with respect to axis A and on planes perpendicular to axis A, and therefore delimit respective spherical surface portions, which define part of the seats or pockets 7 and of the respective edges 8 and 10 towards the annular portions 9 and 11. Diameter Dpa thus defines, with respect to axis A, the radial position of the geometric centers of the respective circular alveoli 13 and of the respective spherical surface portions delimited thereby towards the annular portions 9 and 11 (figure 1); furthermore, according to the invention, the diameter of the alveoli 13 and the respective spherical surface portions delimited thereby towards the annular portions 9 and 11 is slightly greater than that of the balls 2, in particular up to 5% greater than the diameter of the balls 2.

Furthermore, in combination with such a geometric feature, the cage 1 is made so that the pitch diameter Dpc of the crown of balls 2 housed therein, i.e. the diameter of the circumference along which the geometric centers of all the balls 2 are aligned in use, is greater than the pitch diameter Dpa, e.g. by a value equal to approximately 2%, so that there is an eccentricity "e" between the geometric centers of the alveoli 13 (which alveoli 13 have radius Ra - figure 4) and the geometric centers of the rolling balls 2 (which balls 2 have a radius Rc - figure 4) for each alveolus 13. Therefore, the spherical surface portions which delimit the alveoli 13 are arranged eccentrically with respect to the spherical surface which delimits the ball 2 engaged in each alveolus 13, as well shown in figure 4.

Finally, according to a further aspect of the invention, each seat or pocket 7 has radially outwards, i.e. on the side of the portion 9 and at the respective alveolus 13, a radially through cylindrical portion or cavity 130 having diameter Da1, the portion or cavity 130 being radially aligned with the alveolus 13 underneath it, meaning that the concerned alveolus 13 is arranged closer to axis A than portion 130. Diameter Da1 is chosen so that to be smaller than a crosswise dimension of the rolling bodies 2, in this case of the diameter of the balls 2, e.g. so as to be equal to 98% of the diameter of the balls 2 and consequently smaller than the diameter of the alveoli 13.

The first annular portion 9 and the second annular portion 11 of the body 6 are made in one piece of high-performance thermoplastic material having a glass transition temperature higher than 100 °C and capable of not undergoing any thermal decay up to temperatures in the order of 300 °C, because it has been experimentally found that a material having such features can be formed in a cage 1 having the desired thermal expansion and radial centrifuge features.

In particular, the annular body 6, including its first and second annular portion 9 and 11, was made by molding a poly-aryl-ether-ketone (PAEK), preferably a poly-ether-ether-ketone (PEEK), possibly either provided with a filler (e.g. glass or carbon fibers) or not. The outer ring 4 and the rolling bodies 2 are made of steel instead.

The first edge 8 has, by observing the radial surface 12 from the outside inwards, a U-shape, clearly visible in figure 1, at each seat or pocket 7 and on such a radial outer cylindrical lateral surface 12; furthermore, each seat or pocket 7 is laterally delimited in circumferential direction by two longitudinal members 14 parallel to each other and to the symmetry axis A of the body 6 and defining part of the first edge 8 with the edges thereof.

The longitudinal members 14 define with the lateral edges thereof part of the radially inner edge of the portions or cavities 130 of the pockets or seats 7 and are arranged at a reciprocal distance, i.e. from one another, equal to diameter Da1, smaller than the maximum diameter of the rolling body to be housed in the seat or pocket 7, i.e. smaller than the diameter of the balls 2 in the illustrated example; the longitudinal members 14 are however elastically deformable in circumferential direction so that each rolling body 2 is snappingly received in use in the respective seat or pocket 7 inserting it in the seat or pocket 7 radially from the outside inwards to insert each ball 2 into a corresponding alveolus 13.

Once inserted, the rolling body 2 is housed with clearance in the alveolus 13, so as to be able to turn freely, and is withheld in the alveolus 13 both radially outwards, by the radially inner edge of the portion or cavity 130 formed by part of the edge 8 and, laterally, by the longitudinal members 14, and by the part of the portion 11, by means of the edge 10, which withholds the balls 2 in the alveoli 13 thus preventing the same from "falling" before assembly of the cage 1, with the balls 2 already inserted in the pockets or seats 7, on the inner ring 5. Such latter feature is useful during the step of assembling but is not an essential feature for the purposes of the invention.

According to a further aspect of the invention, the cage 1, the rings 4 and 5 and the rolling bodies 2 implement the operation described above, with movement of the "guide" of the cage 1 from the rolling bodies 2 to the outer ring 4 due to the increase of rotation speed of the bearing 3. In particular, the bearing speed 3 is evaluated not only as simple function of the angular speed of the rotational ring 5, but also taking into account the dimensions of the bearing 3, using a parameter named "speed factor".

Hereinafter, "speed factor" indicated by the acronym "ndm" is the product of the average diameter of the bearing 3, expressed in mm multiplied by the rotation speed of the bearing (of the turning ring of the bearing), expressed in rpm.

Therefore, according to the invention, the bearing 3 has the technical feature consisting in that, in combination:
a) when, in use, the bearing 3 operates with a speed factor having a value below a set threshold, the first edge 8 guides the rolling bodies 2 resting thereon, directly cooperating therewith with (minus) a set first radial clearance G1, while a second set radial clearance G2, greater than the first clearance G1, is provided between a radially outer cylindrical lateral surface 12 of the first annular portion 9 of the body 6 and the outer ring 4; therefore, in such conditions, the G2 > G1 relation is true.
b) when, in use, the bearing 3 operates with a speed factor having a value above the set threshold, the first edge 8 no longer guides the rolling bodies 2, leaving them free to roll substantially without friction with the cage 1, due to a set increase in the value of the first clearance G1, while the cylindrical lateral surface 12 cooperates with the outer ring 4 to be guided by the same due to a set reduction in the second clearance G2, which under such a condition is smaller than the first clearance G1; the G2 < G1 relation is true in these second conditions.

According to the invention, the cage 1 is made (dimensioned) so that the set threshold mentioned above is maintained essentially constant as the operative conditions (e.g. working temperature of the bearing 3, ring 4 cooled or not etcetera) vary and remains comprised in the bearing speed factor value range from 1.2 and 1.5 million (of ndm).

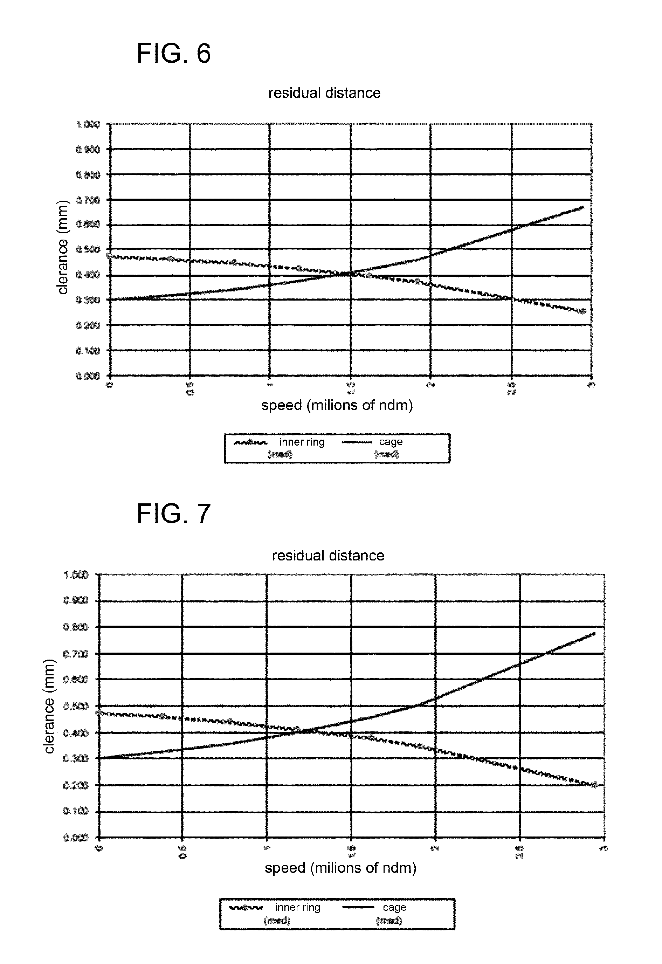

This feature is shown in the graphs in figures 6 and 7, that in figure 6 being made in "normal" conditions with thermal gradients between cage and outer ring variable from zero to 30 °C, while that in figure 7 being made in thermal gradient conditions comprised between zero and 50 °C (cage always hotter than the outer ring). Therefore, according to the invention, the bearing 3 has the feature that, at relatively low rotation speed of the bearing 3, i.e. with speed factor under 600,000 ndm, the cage 1 is guided, i.e. rotably rests, on the rolling bodies 2, while at relatively high rotation speeds of the bearing, i.e. with speed factor either equal to or higher than 1,500,000 ndm, the cage 1 is guided, i.e. rests, on the outer ring 4 because of a differential thermal expansion of the cage 1 with respect to the outer ring 4 and the rolling bodies 2.

Preferably, the rolling bodies 2 are balls and the cage 1 has a single crown of seats or pockets 7 for the balls 2.

On the basis of the description, it is apparent that the invention extends to the use of a cage 1 made of synthetic thermoplastic material, preferably a poly-aryl-ether-ketone, for withholding at least one crown of rolling bodies 2 of a high-performance rolling bearing 3, whereas under a speed value of the bearing 3 comprised between 1.2 and 1.5 million, the cage 1 is guided on the rolling bodies 2, while over such a value, the cage 1 is guided on the outer ring 4 of the bearing 3.

## Claims

1. A cage (1) for withholding rolling bodies in a rolling bearing (3), comprising a single annular body (6) provided with a plurality of seats or pockets (7) arranged as a crown, each delimiting a respective radially through alveolus (13), each one being adapted to house a respective rolling body (2), withholding it at least radially outwards, by means of a first edge (8) of a first annular portion (9) of the body, arranged radially on the outside of the body, and, optionally, also radially inwards by means of a second edge (10) of a second annular portion (11) of the body, arranged radially on the inside of the body; wherein, in combination:
i) the body (6) is made of a material having a thermal expansion coefficient greater than that of the materials of which the rolling bodies (2) and an outer ring (4) of the rolling bearing, which the cage is intended for, are made;
ii) at ambient temperature, the first edge (8) guides the rolling bodies (2) resting thereon, directly cooperating therewith with a set first radial clearance (G1);
iii) in use, at the working temperature of the bearing and above a set speed threshold, the first edge (8) no longer guides the rolling bodies (8), leaving them free to roll substantially without friction with the cage, due to a set increase in the value of the first clearance, while a radially outer cylindrical lateral surface (12) of the first annular portion of the body cooperates with a second radial clearance (G2), under such conditions smaller than the first one (G1), with the outer ring (4) of the bearing; **characterized in that**:
iv) the cage (1) is dimensioned so that a pitch diameter (Dpc) of a crown of rolling bodies (2) housed in use in the crown of seats or pockets (7) of the cage is greater than a pitch diameter (Dpa) of the crown of alveoli (13) delimited by the seats or pockets (7), so that there is an eccentricity (e) between the geometric centers of the alveoli (13) and the geometric centers of the rolling bodies (2) for each alveolus (13) in use; and **in that**
v) radially outwards and at the respective alveolus (13), each seat or pocket (7) has a radially through cylindrical portion or cavity (130) radially aligned with the alveolus (13) underneath, having a diameter (Da1) smaller than a transversal dimension of the rolling bodies (2).

2. A cage according to claim 1, **characterized in that** the first and second annular portions (9, 11) of the body are integrally made in one piece from a high-performance thermoplastic material, having a glass transition temperature higher than 100°C and capable of not undergoing any thermal degradation up to temperatures of the order of 300°C.

3. A cage according to 2, **characterized in that** the annular body (6), including the first and second annular portions, is made by molding a poly-aryl-ether-ketone (PAEK), preferably a poly-ether-ether-ketone (PEEK), provided with a filler or not.

4. A cage according to one of the preceding claims, **characterized in that**, at each seat or pocket and on the radially outer cylindrical lateral surface (12), seen radially from the outside inwards, the first edge (8) has a U shape; each seat or pocket being laterally delimited, in the circumferential direction, between two longitudinal members (14) parallel to each other and to a symmetry axis (A) of the body and defining a part of the first edge (8) and of a respective alveolus (13), arranged at a shorter reciprocal distance than the maximum dimension of the rolling body (2) to be housed within the seat or pocket, and which are elastically deformable in the circumferential direction for snappingly receiving the rolling body within the seat or pocket and respective alveolus (13), inserting it into the seat or pocket (7) radially from the outside inwards.

5. A cage according to one of the preceding claims, **characterized in that** the alveoli (13) have, on a circumferential plane with respect to an axis (A) of the body (6) and on planes perpendicular to axis (A), a circular profile, so as to delimit respective spherical surface portions, which define part of the seats or pockets (7) and of the respective edges (8,10) towards the annular portions (9, 11) of the body; the diameter (Da1) of the cylindrical portion or cavity (130) radially crossing through each seat or pocket (7) being smaller than a diameter of the respective alveolus (13).

6. A precision rolling bearing (3) for high-speeds comprising an outer ring (4), an inner ring (5), at least one crown of rolling bodies (2) interposed between the outer ring and the inner ring for rendering them relatively rotatable with low friction, and a holding cage (1) for the rolling bodies defined by an annular body (6) coaxially arranged between the outer ring and the inner ring, and provided with a plurality of radially through seats or pockets (7) each delimiting a respective radially through alveolus (13), each one being adapted to house a respective rolling body, holding it at least radially towards the outer ring by means of a first edge (8) of a first annular portion (9) of the body, arranged radially on the outside of the body, and optionally radially towards the inner ring by means of a second edge (10) of a second annular portion (11) of the body, arranged radially on the inside of the body; wherein, in combination:
i) the body (6) of the cage (1) is made of a material having a thermal expansion coefficient greater than that of the materials of which the outer ring (4) and the rolling bodies (2) are made;
ii) when, in use, the bearing operates with a speed factor having a value below a set threshold, the first edge (8) guides the rolling bodies (2) resting thereon, directly cooperating with them but for a set first radial clearance (G1), while a second set radial clearance (G2), greater than the first clearance (G1), is provided between a radially outer cylindrical lateral surface (14) of the first annular portion (9) of the cage body and the outer ring (4);
iii) when, in use, the bearing operates with a speed factor having a value above the set threshold, the first edge (8) no longer guides the rolling bodies, leaving them free to roll substantially without friction with the cage, due to a set increase in the value of the first clearance (G1), while the radially outer cylindrical lateral surface (14) of the first annular portion of the body cooperates with the outer ring (4) to be guided by the same due to a set reduction in the second clearance (G2), which under such a condition is smaller than the first clearance (G1); **characterized in that**:
iv) the cage (1) is dimensioned so that a pitch diameter (Dpc) of the crown of rolling bodies (2) housed in use in the crown of seats or pockets (7) of the cage is larger than a pitch diameter (Dpa) of the crown of alveoli (13) delimited by the seats or pockets (7), so that there is an eccentricity (e) between the geometric centers of the alveoli (13) and the geometric centers of the rolling bodies (2) for each alveolus (13) in use; and **in that**
v) radially outwards and at the respective alveolus (13), each seat or pocket (7) has a radially through cylindrical portion or cavity (130) radially aligned with the alveolus (13) underneath having a diameter (Da1) smaller than the maximum dimension of the rolling bodies (2).

7. A bearing according to claim 6, **characterized in that** the cage (1) is made so that the set threshold is comprised between values of the bearing speed factor between 1,200,000 and 1,500,000 ndm, where the speed factor represents the product of the average diameter of the bearing, expressed in mm for the bearing rotation speed, expressed in rpm.

8. A bearing according to claim 6 or 7, **characterized in that** the cage (6) is made of a poly-aryl-ether-ketone (PAEK) based material, preferably a poly-ether-ether-ketone (PEEK), while the outer ring (4) and the rolling bodies (2) are made of steel.

9. A bearing according to one of claims 6 to 8, **characterized in that** at a relatively low rotation speed of the bearing, i.e. with a speed factor below 600,000 ndm, the cage (1) is guided, i.e. it rotationally rests onto the rolling bodies (2), while at relatively high rotation speeds of the bearing, i.e. with a speed factor equal to or higher than 1,500,000 ndm, the cage (1) is guided, i.e. it rests, on the outer ring (4).

10. A bearing according to one of the claims from 6 to 9, **characterized in that** the rolling bodies (2) are balls; and **in that** the cage (1) has a single crown of seats or pockets (7) for the balls; the alveoli (13) having, on a circumferential plane with respect to an axis (A) of the body (6) of the cage and on planes perpendicular to axis (A), a circular profile, so as to delimit respective spherical surface portions, which define part of the seats or pockets (7) and of the respective edges (8,10); the diameter (Da1) of the cylindrical portion or cavity (130) radially crossing through each seat or pocket (7) being smaller than a diameter of the respective alveolus (13).

11. Use of a cage (1) made of synthetic thermoplastic material, preferably a poly-aryl-ether-ketone, for holding at least one crown of rolling bodies (2) in a high performance rolling bearing (3), **characterized in that** the cage (1) is made so that, below a value of the bearing speed factor between 1,200,000 and 1,500,000 ndm, the cage (1) is guided onto the rolling bodies (2), while above such a value the cage (1) is guided onto an outer ring (4) of the bearing; the cage (1) comprising at least one crown of seats or pockets (7) each delimiting a respective radially through alveolus (13) adapted to house a respective rolling body (2); the cage (1) being dimensioned so that a pitch diameter (Dpc) of the crown of rolling bodies (2) is larger than a pitch diameter (Dpa) of the crown of alveoli (13) delimited by the seats or pockets (7), so that there is an eccentricity (e) between the geometric centers of the alveoli (13) and the geometric centers of the rolling bodies (2) for each alveolus (13) in use; and radially outwards and at the respective alveolus (13), each seat or pocket (7) having a radially through cylindrical portion or cavity (130) radially aligned with the alveolus (13) underneath having a diameter (Da1) smaller than the maximum dimension of the rolling bodies (2).

## Patentansprüche

1. Käfig (1) für das Zurückhalten von Wälzkörpern in einem Wälzlager (3), umfassend einem einzelnen ringförmigen Körper (6), der mit mehreren Sitzen oder Taschen (7) vorgesehen ist, die als ein Kranz angeordnet sind, und jeweils ein radiales Durchgangsloch (13) begrenzen, das jeweils zum Aufnehmen eines zugehörigen Wälzkörpers (2) ausgelegt ist, und diesen mindestens radial nach außen hin mittels eines ersten Randes (8) eines ersten ringförmigen Abschnitts (9) des Körpers, der radial auf der Außenseite des Körpers angeordnet ist und wahlweise auch radial nach innen mittels eines zweiten Randes (10) eines zweiten ringförmigen Abschnitts (11) des Körpers, der radial auf der Innenseite des Körpers angeordnet ist, zurückhält; wobei, in Kombination:
i) der Körper (6) aus einem Material mit einem Wärmeausdehnungskoeffizienten hergestellt ist, der größer als derjenige der Materialien ist, aus denen die Wälzkörper (2) und ein Außenring (4) des Wälzlagers hergestellt sind, für den der Käfig bestimmt ist;
ii) bei Umgebungstemperatur der erste Rand (8) die darauf aufliegenden Wälzkörper (2) führt und damit direkt mit einem voreingestellten ersten radialen Abstand (G1) zusammenwirkt;
iii) während der Verwendung bei Arbeitstemperatur des Lagers und über einem voreingestellten Drehzahlschwellenwert der erste Rand (8) die Wälzkörper (2) nicht länger führt und diese frei lässt, um im Wesentlichen ohne Reibung mit dem Käfig zu rollen, und zwar aufgrund einer voreingestellten Erhöhung des Werts des ersten Abstands, während eine radiale Außenzylinderseitenoberfläche (12) des ersten ringförmigen Abschnitts des Körpers mit einem zweiten Radialabstand (G2) zusammenwirkt, der unter solchen Bedingungen kleiner als der erste (G1) vom Außenring (4) des Lagers ist; **dadurch gekennzeichnet, dass**
iv) der Käfig (1) so bemessen ist, dass ein Wirkdurchmesser (Dpc) eines Kranzes von Wälzkörpern (2) während der Verwendung in dem Kranz aus Sitzen oder Taschen (7) des Käfigs größer als ein Wirkdurchmesser (Dpa) des Lochkranzes (13) ist, der von den Sitzen oder Taschen (7) begrenzt wird, sodass eine Exzentrizität (e) zwischen den geometrischen Mitten der Löcher (13) und den geometrischen Mitten der Wälzkörper (2) für jedes Loch (13) während der Verwendung vorliegt;
und dadurch, dass
v) radial nach außen und am zugehörigen Loch (13) jeder Sitz oder jede Tasche (7) einen radialen, zylindrischen Durchgangsabschnitt oder -hohlraum (130) aufweist, der radial mit dem Loch (13) darunter ausgerichtet ist und einen Durchmesser (Da1) aufweist, der kleiner als eine Querabmessung der Wälzkörper (2) ist.

2. Käfig nach Anspruch 1, **dadurch gekennzeichnet, dass** die ersten und zweiten ringförmigen Abschnitte (9, 11) des Körpers einstückig aus einem Hochleistungsthermoplast hergestellt sind, das eine Glasübergangstemperatur aufweist, die höher als 100 °C ist und keinem thermischen Abbau bis zu Temperaturen in der Größenordnung von 300 °C unterliegt.

3. Käfig nach Anspruch 2, **dadurch gekennzeichnet, dass** der ringförmige Körper (6), der die ersten und zweiten ringförmigen Abschnitte aufweist, durch Gießen eines Poly-Aryl-Ether-Ketons (PAEK), vorzugsweise eines Poly-Ether-Ether-Ketons (PEEK) hergestellt wird, der mit oder ohne Füllstoff bereitgestellt wird.

4. Käfig nach einem der vorhergehenden Ansprüche, **dadurch gekennzeichnet, dass** an jedem Sitz oder jeder Tasche und an der radialen Außenzylinderseitenoberfläche (12), wenn radial von außen nach innen gesehen, der erste Rand (8) eine U-Form aufweist; wobei jeder Sitz oder jede Tasche seitlich in Umfangsrichtung zwischen zwei Längselementen (14), die parallel zueinander und zu einer Symmetrieachse (A) des Körpers verlaufen und einen Teil des ersten Randes (8) und eines zugehörigen Lochs (13) bilden, die in einem kürzeren gegenseitigen Abstand als die maximale Abmessung des Wälzkörpers (2), der innerhalb des Sitzes oder der Tasche aufgenommen werden soll, begrenzt ist, diese elastisch in Umfangsrichtung verformbar sind, um den Wälzkörper federnd in dem Sitz oder der Tasche und dem zugehörigen Loch (13) aufzunehmen, indem er in den Sitz oder die Tasche (7) radial von außen nach innen eingeführt wird.

5. Käfig nach einem der vorhergehenden Ansprüche, **dadurch gekennzeichnet, dass** die Löcher (13) auf einer Umfangsebene in Bezug auf eine Achse (A) des Körpers (6) und auf Ebenen senkrecht zur Achse (A) ein Kreisprofil aufweisen, um zugehörige kugelförmige Oberflächenabschnitte zu begrenzen, die einen Teil der Sitze oder Taschen (7) und der zugehörigen Ränder (8,10) in Richtung der ringförmigen Abschnitte (9, 11) des Körpers definieren; wobei der Durchmesser (Da1) des zylindrischen Abschnitts oder Hohlraums (130) radial durch jeden Sitz oder jede Tasche (7) verläuft und kleiner als ein Durchmesser des zugehörigen Lochs (13) ist.

6. Präzisionswälzlager (3) für Hochgeschwindigkeiten, umfassend einen Außenring (4), einen Innenring (5), mindestens einen Kranz aus Wälzkörpern (2), die zwischen dem Außenring und dem Innenring zur relativen Drehung davon zueinander mit geringer Reibung angeordnet sind, und einen Haltekäfig (1) für die Wälzkörper, die von einem ringförmigen Körper (6) definiert werden, der koaxial zwischen dem Außenring und dem Innenring angeordnet ist und mit mehreren Durchgangssitzen oder -taschen (7) bereitgestellt ist, die jeweils ein radiales Durchgangsloch (13) begrenzen, das jeweils zum Aufnehmen eines zugehörigen Wälzkörpers ausgelegt ist und diesen mindestens radial in Richtung des Außenrings mittels einer ersten Randes (8) des ersten ringförmigen Abschnitts (9) des Körpers, der radial an der Außenseite des Körpers angeordnet ist, und wahlweise radial in Richtung des Innenrings mittels eines zweiten Randes (10) eines zweiten ringförmigen Abschnitts (11) des Körpers, der radial an der Innenseite des Körpers angeordnet ist, hält, umfasst; wobei, in Kombination:
i) der Körper (6) des Käfigs (1) aus einem Material mit einem Wärmeausdehnungskoeffizienten hergestellt ist, der größer als derjenige der Materialien ist, aus denen der Außenring (4) und die Wälzkörper (2) hergestellt sind;
ii) während der Verwendung das Lager mit einem Drehzahlfaktor betrieben wird, der einen Wert unter einem voreingestellten Schwellenwert aufweist, wobei der erste Rand (8) die Wälzkörper (2), die darauf aufliegen, führt und direkt mit diesen zusammenwirkt, außer für einen voreingestellten radialen Abstand (G1), während ein zweiter voreingestellter radialer Abstand (G2), der größer als der erste Abstand (G1) ist, zwischen einer radialen Außenzylinderseitenoberfläche (14) des ersten ringförmigen Abschnitts (9) des Käfigkörpers und des Außenrings (4) vorgesehen;
iii) während der Verwendung das Lager mit einem Drehzahlfaktor betrieben wird, der einen Wert über einem voreingestelltem Schwellenwert besitzt, wobei der erste Rand (8) die Wälzkörper nicht länger führt und diese frei lässt, damit diese im Wesentlichen ohne Reibung mit dem Käfig rollen, aufgrund einer voreingestellten Erhöhung des Wertes des ersten Abstands (G1), während die radiale Außenzylinderseitenoberfläche (14) des ersten ringförmigen Abschnitts des Körpers mit dem Außenring (4), der davon geführt werden soll, aufgrund einer voreingestellten Verringerung des zweiten Abstands (G2) zusammenwirkt, der unter einer solchen Bedingung kleiner als der erste Abstand (G1) ist;
**dadurch gekennzeichnet, dass**
iv) der Käfig (1) so bemessen ist, dass ein Wirkdurchmesser (Dpc) des Kranzes aus Wälzkörpern (2), die während der Verwendung in dem Kranz aus Sitzen oder Taschen (7) des Käfigs aufgenommen sind, größer als ein Wirkdurchmesser (Dpa) des Kranzes aus Löchern (13) ist, der von den Sitzen oder Taschen (7) begrenzt wird, sodass eine Exzentrizität (e) zwischen den geometrischen Mitten der Löcher (13) und den geometrischen Mitten der Wälzkörper (2) für jedes Loch (13) während der Verwendung vorliegt;
und dadurch, dass
v) radial nach außen und an dem zugehörigen Loch (13) jeder Sitz oder Tasche (7) einen radialen, zylindrischen Durchgangsabschnitt oder -hohlraum (130) aufweist, der radial mit dem Loch (13) darunter ausgerichtet ist, das einen Durchmesser (Da1) aufweist, der kleiner als eine maximale Abmessung der Wälzkörper (2) ist.

7. Lager nach Anspruch 6, **dadurch gekennzeichnet, dass** der Käfig (1) so hergestellt ist, dass der voreingestellte Schwellenwert zwischen Werten des Lagerdrehzahlfaktors von 1.200.000 und 1.500.000 NDM liegt, wobei der Drehzahlfaktor das Produkt aus dem durchschnittlichen Durchmesser des Lagers in mm für die Lagerdrehzahl in U/min repräsentiert.

8. Lager nach Anspruch 6 oder 7, **dadurch gekennzeichnet, dass** der Käfig (6) aus einem Material auf Poly-Aryl-Ether-Keton (PAEK)-Basis hergestellt ist, vorzugsweise einem Poly-Ether-Ether-Keton (PEEK), während der Außenring (4) und die Wälzkörper (2) aus Stahl hergestellt sind.

9. Lager nach einem der Ansprüche 6 bis 8, **dadurch gekennzeichnet, dass** bei einer relativ niedrigen Drehzahl des Lagers, d. h. bei einem Drehzahlfaktor unter 600.000 ndm, der Käfig (1) geführt wird, d. h. drehbar auf den Wälzkörpern (2) aufliegt, während bei relativ hohen Drehzahlen des Lagers, d. h. bei einem Drehzahlfaktor von gleich oder höher als 1.500.000 ndm, der Käfig (1) geführt wird, d. h. auf dem Außenring (4) aufliegt.

10. Lager nach einem der Ansprüche 6 bis 9, **dadurch gekennzeichnet, dass** die Wälzkörper (2) Kugeln sind; und dadurch, dass der Käfig (1) einen einzelnen Kranz aus Sitzen oder Taschen (7) für die Kugeln aufweist; wobei die Löcher (13) auf einer Umfangsebene in Bezug auf eine Achse (A) des Körpers (6) des Käfigs und auf Ebenen senkrecht zur Achse (A) ein Kreisprofil aufweisen, um zugehörige kugelförmige Oberflächenabschnitte zu begrenzen, die einen Teil der Sitze oder Taschen (7) und der zugehörigen Ränder (8,10) definieren; wobei der Durchmesser (Da1) des zylindrischen Abschnitts oder Hohlraums (130) radial durch jeden Sitz oder Tasche (7) verläuft und kleiner als ein Durchmesser des zugehörigen Lochs (13) ist.

11. Verwendung eines Käfigs (1) aus thermoplastischem Kunststoff, vorzugsweise aus einem Poly-Aryl-Ether-Keton, zum Halten von mindestens einem Kranz aus Wälzkörpern (2) in einem Hochleistungswälzlager (3), **dadurch gekennzeichnet, dass** der Käfig (1) so hergestellt ist, dass unter einem Wert des Lagerdrehzahlfaktors zwischen 1.200.000 und 1.500.000 ndm der Käfig (1) auf den Wälzkörpern (2) geführt wird, während über einem solchen Wert der Käfig (1) auf einem Außenring (4) des Lagers geführt wird; wobei der Käfig (1) mindestens einen Kranz aus Sitzen oder Taschen (7) umfasst, die jeweils ein zugehöriges, radiales Durchgangsloch (13) begrenzen, das zum Aufnehmen eines zugehörigen Wälzkörpers (2) ausgelegt ist; wobei der Käfig (1) so bemessen ist, dass ein Wirkdurchmesser (Dpc) des Kranzes aus Wälzkörpern (2) größer als ein Wirkdurchmesser (Dpa) des Lochkranzes (13) ist, der von den Sitzen oder Taschen (7) begrenzt wird, sodass eine Exzentrizität (e) zwischen den geometrischen Mitten der Löcher (13) und den geometrischen Mitten der Wälzkörper (2) für jedes Loch (13) während der Verwendung vorliegt; und radial nach außen und an dem zugehörigen Loch (13) jeder Sitz oder Tasche (7) einen radialen, zylindrischen Durchgangsabschnitt oder -hohlraum (130) aufweist, der radial mit dem Loch (13) darunter ausgerichtet ist und einen Durchmesser (Da1) aufweist, der kleiner als eine maximale Abmessung der Wälzkörper (2) ist.

## Revendications

1. Cage (1) pour retenir des corps de roulement dans un palier à roulement (3), comprenant un seul corps annulaire (6) pourvu d'une pluralité de logements ou de poches (7) agencé (e) s sous forme de couronne, chacun(e) délimitant une alvéole radialement traversante (13) respective, chacune étant conçue pour loger un corps de roulement (2) respectif, le retenant au moins radialement vers l'extérieur, au moyen d'un premier bord (8) d'une première portion annulaire (9) du corps, agencée radialement à l'extérieur du corps et, éventuellement, également radialement vers l'intérieur au moyen d'un deuxième bord (10) d'une deuxième portion annulaire (11) du corps, agencée radialement sur l'intérieur du corps ; dans laquelle, en combinaison :
i) le corps (6) est constitué d'un matériau ayant un coefficient de dilatation thermique supérieur à celui des matériaux dont sont constitués les corps de roulement (2) et une bague extérieure (4) du palier à roulement, pour lequel la cage est prévue ;
ii) à température ambiante, le premier bord (8) guide les corps de roulement (2) reposant sur celui-ci, coopérant directement avec ceux-ci avec un premier jeu radial fixe (G1) ;
iii) lors de l'utilisation, à la température de travail du palier et au-dessus d'un seuil de vitesse fixe, le premier bord (8) ne guide plus les corps de roulement (2), les laissant libres de rouler sensiblement sans friction avec la cage, en raison d'une augmentation fixe de la valeur du premier jeu, tandis qu'une surface latérale cylindrique radialement extérieure (12) de la première portion annulaire du corps coopère avec un deuxième jeu radial (G2), inférieur au premier jeu (G1) dans certaines conditions, avec la bague extérieure (4) du palier ; **caractérisée en ce que**
iv) la cage (1) est dimensionnée de telle sorte qu'un diamètre primitif (Dpc) d'une couronne de corps de roulement (2) logés lors de l'utilisation dans la couronne de logements ou de poches (7) de la cage soit supérieur à un diamètre primitif (Dpa) de la couronne d'alvéoles (13) délimitées par les logements ou les poches (7), de telle sorte qu'il y ait une excentricité (e) entre les centres géométriques des alvéoles (13) et les centres géométriques des corps de roulement (2) pour chaque alvéole (13) lors de l'utilisation ; et **en ce que**
v) radialement vers l'extérieur et au niveau de l'alvéole (13) respective, chaque logement ou poche (7) a une portion ou cavité (130) cylindrique radialement traversante alignée radialement avec l'alvéole (13) en dessous, ayant un diamètre (Da1) inférieur à une dimension transversale des corps de roulement (2).

2. Cage selon la revendication 1, **caractérisée en ce que** les première et deuxième portions annulaires (9, 11) du corps sont formées d'une seule pièce en un matériau thermoplastique de haute performance, ayant une température de transition vitreuse supérieure à 100 °C et susceptible de ne subir aucune dégradation thermique jusqu'à des températures de l'ordre de 300 °C.

3. Cage selon la revendication 2, **caractérisée en ce que** le corps annulaire (6), comportant les première et deuxième portions annulaires, est formé en moulant une polyaryléthercétone (PAEK), de préférence une polyétheréthercétone (PEEK), pourvue ou non d'une charge.

4. Cage selon l'une des revendications précédentes, **caractérisée en ce qu'**au niveau de chaque logement ou poche et sur la surface latérale cylindrique radialement extérieure (12), vu radialement de l'extérieur vers l'intérieur, le premier bord (8) a une forme en U ; chaque logement ou poche étant délimité(e) latéralement, dans la direction circonférentielle, entre deux organes longitudinaux (14) parallèlement l'un à l'autre et à un axe de symétrie (A) du corps et définissant une partie du premier bord (8) et d'une alvéole (13) respective, agencés à une distance réciproque plus courte que la dimension maximale du corps de roulement (2) devant être logé dans le siège ou la poche, et qui sont déformables élastiquement dans la direction circonférentielle pour recevoir par encliquetage le corps de roulement dans le logement ou la poche et l'alvéole (13) respective, en l'insérant dans le logement ou la poche (7) radialement de l'extérieur vers l'intérieur.

5. Cage selon l'une des revendications précédentes, **caractérisée en ce que** les alvéoles (13) ont, sur un plan circonférentiel par rapport à un axe (A) du corps (6) et sur des plans perpendiculaires à l'axe (A), un profil circulaire, de manière à délimiter des portions de surface sphériques respectives, qui définissent une partie des logements ou des poches (7) et des bords (8, 10) respectifs en direction des portions annulaires (9, 11) du corps ; le diamètre (Da1) de la portion ou cavité cylindrique (130) traversant radialement chaque logement ou poche (7) étant inférieur à un diamètre de l'alvéole (13) respective.

6. Palier à roulement de précision (3) pour des grandes vitesses, comprenant une bague extérieure (4), une bague intérieure (5), au moins une couronne de corps de roulement (2) interposée entre la bague extérieure et la bague intérieure pour les rendre relativement rotatives avec faible friction, et une cage de retenue (1) pour les corps de roulement définie par un corps annulaire (6) agencé coaxialement entre la bague extérieure et la bague intérieure, et pourvue d'une pluralité de logements ou de poches radialement traversant(e)s (7) délimitant chacun(e) une alvéole radialement traversante (13) respective, chacune étant conçue pour loger un corps de roulement respectif, le retenant au moins radialement vers la bague extérieure au moyen d'un premier bord (8) d'une première portion annulaire (9) du corps, agencée radialement à l'extérieur du corps et, éventuellement, radialement vers la bague intérieure au moyen d'un deuxième bord (10) d'une deuxième portion annulaire (11) du corps, agencée radialement sur l'intérieur du corps ; dans lequel, en combinaison :
i) le corps (6) de la cage (1) est constitué d'un matériau ayant un coefficient de dilatation thermique supérieur à celui des matériaux dont sont constitués la bague extérieure (4) et les corps de roulement (2) ;
ii) lorsque, lors de l'utilisation, le palier fonctionne à un facteur de vitesse ayant une valeur en dessous d'un seuil fixe, le premier bord (8) guide les corps de roulement (2) reposant sur celui-ci, coopérant directement avec ceux-ci à l'exception d'un premier jeu radial fixe (G1), tandis qu'un deuxième jeu radial fixe (G2), supérieur au premier jeu (G1), est prévu entre une surface latérale cylindrique radialement extérieure (14) de la première portion annulaire (9) du corps de cage et la bague extérieure (4) ;
iii) lorsque, lors de l'utilisation, le palier fonctionne à un facteur de vitesse ayant une valeur au-dessus du seuil fixe, le premier bord (8) ne guide plus les corps de roulement, les laissant libres de rouler sensiblement sans friction avec la cage, en raison d'une augmentation fixe de la valeur du premier jeu (G1), tandis que la surface latérale cylindrique radialement extérieure (14) de la première portion annulaire du corps coopère avec la bague extérieure (4) devant être guidée par celui-ci en raison d'une diminution fixe du deuxième jeu (G2), qui est, dans de telles conditions, inférieur au premier jeu (G1) ; **caractérisé en ce que** :
iv) la cage (1) est dimensionnée de telle sorte qu'un diamètre primitif (Dpc) de la couronne de corps de roulement (2) logés lors de l'utilisation dans la couronne de logements ou de poches (7) de la cage soit supérieur à un diamètre primitif (Dpa) de la couronne d'alvéoles (13) délimitées par les logements ou les poches (7), de telle sorte qu'il y ait une excentricité (e) entre les centres géométriques des alvéoles (13) et les centres géométriques des corps de roulement (2) pour chaque alvéole (13) lors de l'utilisation ;
et **en ce que**
v) radialement vers l'extérieur et au niveau de l'alvéole (13) respective, chaque logement ou poche (7) a une portion ou cavité (130) cylindrique radialement traversante alignée radialement avec l'alvéole (13) en dessous ayant un diamètre (Da1) inférieur à la dimension maximale des corps de roulement (2).

7. Palier selon la revendication 6, **caractérisé en ce que** la cage (1) est formée de telle sorte que le seuil fixe soit compris entre des valeurs du facteur de vitesse du palier entre 1 200 000 et 1 500 000 ndm, le facteur de vitesse représentant le produit du diamètre moyen du palier, exprimé en mm, par la vitesse de rotation du palier, exprimée en tr/min.

8. Palier selon la revendication 6 ou 7, **caractérisé en ce que** la cage (6) est constituée d'un matériau à base de polyaryléthercétone (PAEK), de préférence une polyétheréthercétone (PEEK), tandis que la bague extérieure (4) et les corps de roulement (2) sont constitués d'acier.

9. Palier selon l'une des revendications 6 à 8, **caractérisé en ce qu'**à une vitesse de rotation relativement faible du palier, c'est-à-dire avec un facteur de vitesse inférieur à 600 000 ndm, la cage (1) est guidée, c'est-à-dire qu'elle repose de manière rotative sur les corps de roulement (2), tandis qu'à des vitesses de rotation relativement élevées du palier, c'est-à-dire avec un facteur de vitesse supérieur ou égal à 1 500 000 ndm, la cage (1) est guidée, c'est-à-dire qu'elle repose, sur la bague extérieure (4).

10. Palier selon l'une des revendications 6 à 9, **caractérisé en ce que** les corps de roulement (2) sont des billes ; et **en ce que** la cage (1) a une seule couronne de logements ou de poches (7) pour les billes ; les alvéoles (13) ayant, sur un plan circonférentiel par rapport à un axe (A) du corps (6) de la cage et sur des plans perpendiculaires à l'axe (A), un profil circulaire, de manière à délimiter des portions de surface sphériques respectives, qui définissent une partie des logements ou des poches (7) et des bords (8, 10) respectifs ; le diamètre (Da1) de la portion ou cavité cylindrique (130) traversant radialement chaque logement ou poche (7) étant inférieur à un diamètre de l'alvéole (13) respective.

11. Utilisation d'une cage (1) constituée d'un matériau thermoplastique synthétique, de préférence une polyaryléthercétone, pour retenir au moins une couronne de corps de roulement (2) dans un palier à roulement de haute performance (3), **caractérisée en ce que** la cage (1) est formée de telle sorte que, en dessous d'une valeur du facteur de vitesse du palier entre 1 200 000 et 1 500 000 ndm, la cage (1) est guidée sur les corps de roulement (2), tandis qu'au dessus d'une telle valeur, la cage (1) est guidée sur une bague extérieure (4) du palier ; la cage (1) comprenant au moins une couronne de logements ou de poches (7) délimitant chacun(e) une alvéole radialement traversante (13) respective conçue pour loger un corps de roulement (2) respectif ; la cage (1) étant dimensionnée de telle sorte qu'un diamètre primitif (Dpc) de la couronne de corps de roulement (2) soit supérieur à un diamètre primitif (Dpa) de la couronne d'alvéoles (13) délimitées par les logements ou les poches (7), de telle sorte qu'il y ait une excentricité (e) entre les centres géométriques des alvéoles (13) et les centres géométriques des corps de roulement (2) pour chaque alvéole (13) lors de l'utilisation ; et radialement vers l'extérieur et au niveau de l'alvéole (13) respective, chaque logement ou poche (7) ayant une portion ou cavité (130) cylindrique radialement traversante alignée radialement avec l'alvéole (13) en dessous ayant un diamètre (Da1) inférieur à la dimension maximale des corps de roulement (2).
